# EUROPEAN PATENT APPLICATION

(11) **EP 0 773 054 A1**
(43) Date of publication of application: **14.05.1997**
(21) Application number: 96202063.2
(22) Date of filing: 20.07.1996
(51) Int. Cl.: B01D 35/30

(54) **A long-life oil filter for internal combustion engines**

(30) Priority: 10.11.1995 IT TO950912
(71) Applicant: KINGDRAGON S.p.A., 10153 Turin (IT)
(72) Inventor: Villani, Franco, 10131 Turin (IT)
(74) Representative: Robba, Eugenio

(57) **Abstract**

The invention concerns a long-life oil filter for internal combustion engines comprising a cup-shaped body (1), a cover (2) for closing the open end of the body (1), a sleeve (3) centrally positioned within said body (1), at least a filter cartridge (10) of a washable material, such as a stainless steel fabric, and removable blocking means for pressing the cover (2) against the body (1); the cover (2) and the body (1) being preferably formed through die-cast or by stamped plate, with the filter body being provided with integrally formed cooling fins (15).

## Description

The present invention relates to oil filters for endothermic (internal combustion) engines of the long-life type.

More particularly the invention is concerned with filters for filtering the lubricant of IC engines to be used for heavy duty service, high performance or long mileages.

As it is known the IC engines used on vehicles are equipped with a lubricating circuit for lubricating the engine moving parts in which a lubricating oil is forcedly circulated under pressure by a pump.

It is further known that one of the problems in lubricating moving parts of IC engines resides in the presence of impurity and iron and carbon deposits tending to contaminate the lubricant thus degrading its lubricating properties.

In view of the above, one of the essential components for a good working of the lubricating circuit in IC engines is constituted by the filter.

Commonly the filter (assembly) for the lubricants of IC engines is made up by a rigid case housing a cartridge of filter material, usually paper having a suitable porosity, the case being closed by a cover provided with means for fastening the case to the engine, and usually equipped with one or more inlet holes and one outlet hole for the lubricant.

The oil filters for IC engines of the above mentioned type are subjected to wear due to the progressive loss of the filtering capability and to clogging of the filter cartridge.

The oil filters of the above mentioned type are conventionally replaced by a new filter after time intervals that depend on their employment conditions.

This replacement operation can take place, for example, when the vehicle has covered a few thousands kilometers, and in the service life of the engine more than fifteen replacements can be required.

The need of a periodical replacement of the filter with a new one brings about as unavoidable consequence the production of wastes, in this particular case of worn-out filters that are highly polluting and quite difficult to be recycled.

On the other hand, the cost of the replacement, added to the need of frequent replacements, e.g. caused by a high mileage of the vehicle or by a severe use thereof discourages the vehicle owner from carrying out the necessary replacements at the prescribed time intervals.

In order to overcome the drawbacks deriving from the disposal of the lubricating filters there have been suggested filter designs that allow for replacing only the filter cartridge housed within the filter assembly.

An example of the above solution is disclosed in the PCT application No. US94/08126 concerning a filter assembly with a case that can be reused after the replacement of the filter cartridge.

However this solution does not eliminate the drawback associated with the disposal of the filter cartridge and with the cost of its replacement. Moreover the construction of the filter case described in the above patent application does not appear to be suitable for use in heavy duty conditions nor would seem capable to withstand the several replacements of the oil filters occurring for example in the service life of heavy vehicles or earthmovers.

It is therefore an object of the present invention to realize an oil filter for IC engines capable of overcoming the above mentioned drawbacks.

Another object della present invention is to realize a long-life oil filter that is easy to be used and to be manufactured.

Another object of the present invention is to realize an oil filter for IC engines accomplishing a very efficient filtering of the lubricant.

These and other objects are achieved by the filter assembly of the present invention as defined in the attached claims.

A filter assembly in accordance with the present invention will now be disclosed in detail with particular reference to the attached drawings that are only exemplary and not limiting, and illustrate preferred embodiments of the invention, and in which:
Figure 1 shows a cross-section view of a first embodiment of a filter according to the present invention;
Figure 2 shows a cross-section view of a second embodiment of a filter according to the present invention;
Figure 3 shows a cross-section view of a third embodiment of a filter according to the present invention;

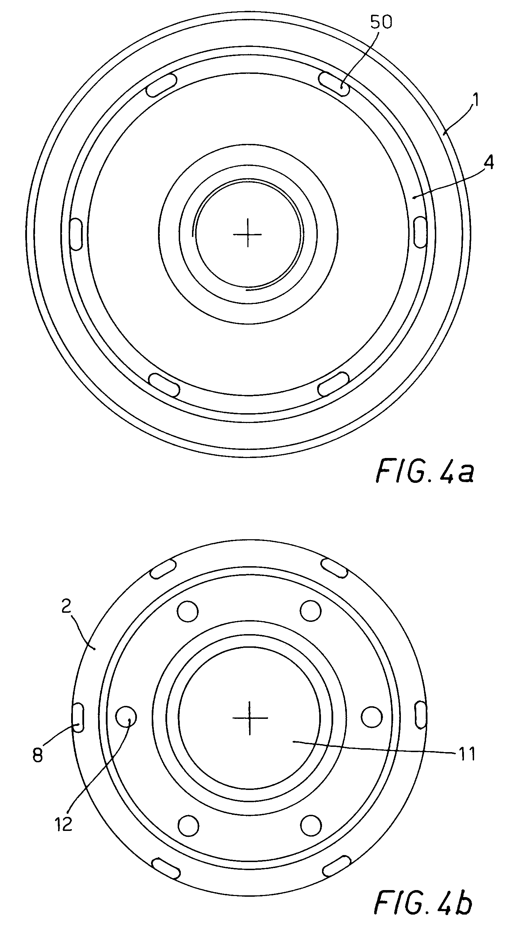

Figure 4a is a top plan view of the filter body and Fig.4b is a bottom view of the cover of a filter in accordance with the embodiment of Fig.1;
Figure 5 is a top view of the cover of a filter in accordance with the embodiment of Fig.3;
Figure 6 is a top view of the filter cartridge;

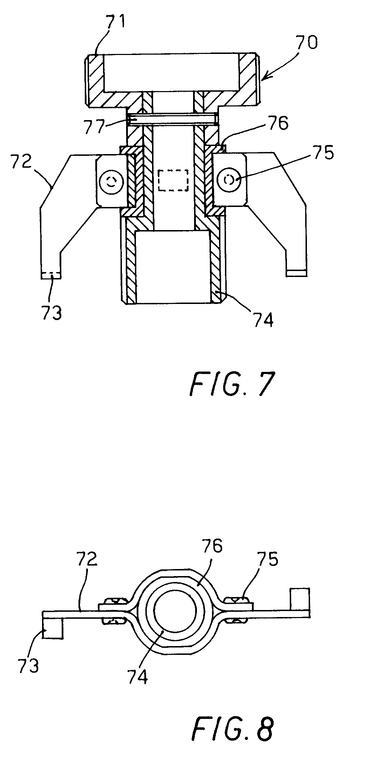

Figure 7 is a side view of the puller for extracting the filter cover in accordance with the embodiments illustrated in Fig.1 and Fig.3;
Figure 8 is a bottom view of the puller of Fig.7;

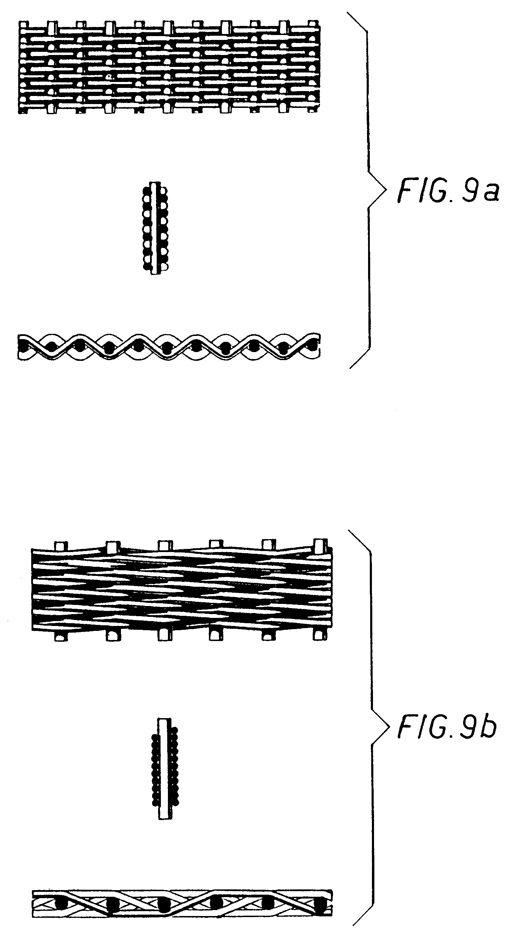

Figure 9 is a schematic view of two tessuti used in the filter cloth or fabric according to the invention, of the Reps type (Fig.9a), and Touraille type (Fig.9b), respectively.

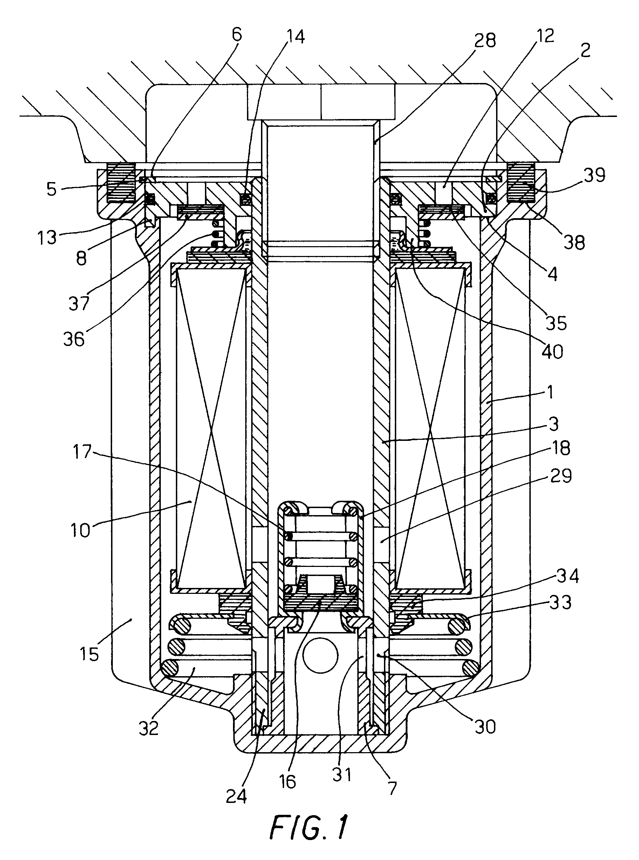

With reference to Fig.1 there is illustrated a first embodiment of the filter assembly according to the present invention comprising a substantially cup-shaped cylindrical body 1, a cover 2, substantially circular and adapted to close the open end of the body 1, and a sleeve 3, centrally located in respect of body 1.

One end 24 of the sleeve 3 is firmly screwed in a threaded seat at the closed end of the body 1, while the other and is free and can be screwed into a sleeve 28, provided on the engine for securing the oil filter thereto.

Moreover a circumferential groove 38 is formed in the rim of the body 1 for housing a gasket or seal 39 between the body 1 and the engine on which the filter is mounted.

The interior of the sleeve 3, that is provided with radial holes 29 and 30, defines a channel for draining the oil from the filter towards the engine through the sleeve 28.

The holes 29 and 30 are formed towards the closed end of the body 1 thus preventing the emptying of the filter in case this latter is fitted onto the engine overturn, after the engine has been stopped.

The cover 2 is provided with a central hole 11, through which the sleeve 3 passes, and with peripheral holes 12, through which the lubricant is pumped into the filter from the engine.

In case of a lack of pressure in the lubricating circuit, the holes 12 are closed by a rubber ring 35, biased against the holes by a spring 36 through a metal ring 37.

Within the body 1, at the open end thereof there is provided a circumferential stop shoulder 4 for preventing the cover 2 penetrating into the body 1 when the cover 2 is in the closed position.

The body 1 is further provided a circumferential groove 5 formed towards the open end with respect to the shoulder 4 and housing - at least partially - a removable sealing in form of an elastic split ring 6, of the type known as "Seeger ring".

Such elastic ring 6 constitutes a constraint against the axial movement of the cover 2 when this latter is in the closed position with respect to the body 1 against the shoulder 4, as illustrated in Fig.1.

An alternative embodiment to the above illustrated solution provides that the circumferential groove 5 is formed in the sleeve. In such a case for extracting the elastic ring 6 from the groove 5 to release the cover 2 from the body 1, the ring should be expanded, rather than contracted.

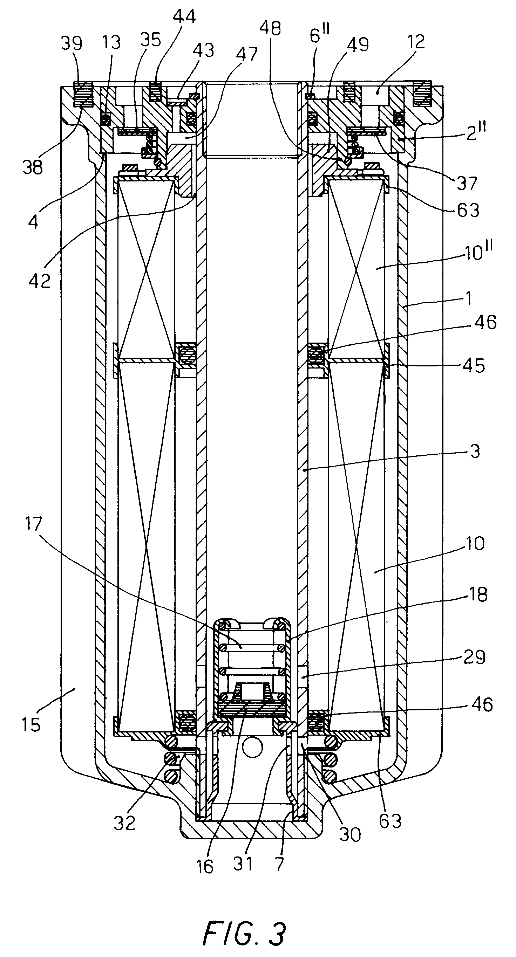

Such an alternative embodiment for the positioning of the elastic ring 6 is shown in Fig. 3 that shows a third preferred embodiment of the invention.

The body 1 houses a cylindrical filter cartridge 10, provided with a central hole 62, formed by folding (pleating) a sheet of a long-life washable filtering material, made for example by a fabric of stainless steel wires or sintetic fibers with width between the meshes preferably comprised in the range 25-100 µm.

With reference to Fig.s 9a and 9b there are illustrated two examples of stainless steel fabrics employed in a filter according to the invention, of the Reps and Touraille types, respectively.

In the Reps type fabric, the crossing of the wires follows the tight system, but the wires of the the weft match with each other, differently from the warp wires. This way the passagge of the fluid takes place only transversely, through the gaps formed at the wire crossings.

Even in the Touraille type fabric, the wires forming the weft match with each other, but are disposed according to the cruciate system.

Moreover, both in the Reps and Touraille typologies the diameters of the warp wires are usually larger than the diameters of the the weft wires.

The arrangement of the wires according to a Touraille and Reps fabric has been found to be particularly resistant to the high pressures and to the prolonged use that is typical of oil filters for IC engines.

Additionally the structure of the fabric used for making the filter cartridge 10 proved to be particularly resistant to the washing operations that use biodegradable detergents and compressed air.

A coil spring 32, with an end abutting against the closed end of the body 1, firmly retains the cartridge 10 in position within the body 1 pressed against an inward cylindrical extension 40 of the cover 2.

Between the coil spring 32 and the cartridge 10 there are further provided a metal ring 33, resting against the other end of the spring 32, and an elastic annular insert 34 located between the ring 33 and the cartridge 10.

Two seals 13 and 14 are further provided between the cover 2 and the body 1 and between the cover 2 and the sleeve 3, respectively, for preventing leaks of the lubricant from the body 1, when the engine is stopped and the filter is mounted overturn, a situation that would otherwise cause the emptying of the filter with the risk of damages to the mechanical members when the engine is subsequentely started up.

A by-pass device for allowing the oil flow when the cartridge 10 is clogged by the accumulation of deposits is provided within the sleeve 3, in corrispondencve with the end securred to the body 1, such device comprising a cap 16, a spring 17 and a cage 18 for retaining the spring 17 against the cap 16.

The by-pass device is supported by a hollow cylindrical body 7, located within the sleeve 3 and integer with this latter, provided with holes 31 aligned with the holes 30 formed in the sleeve 3, for the oil passage.

When the oil pressure against the cap 16 overcomes the force of the spring 17 because of a clogging of the cartridge 10, the cap 16 is raised and consequentely the oil flows through the holes 30, directly into the sleeve 3 and from here towards the engine.

The body 1 is provided with outside protruding cooling radial fins 15 with the purpose of increasing the heat radiating surface of the body 1 for an enhanced dissipation of the heat built-up by the filter during the engine working.

In accordance with this embodiment of the invention, the filter can be opened by acting on the elastic ring 6 and lifting the cover 2.

This way the filter cartridge 10 can be removed and washed (and the body 1 too), without requiring additional disassembling operations and without the risk that a component becomes accidentally free, or that a component has to be dismounted from the body 1 or from the cover 2 to be cleaned.

In order to make easier the extraction of the filter cartridge 10 without damaging the body 1 and the cartridge 10, a semicircular handle 60 is further provided that is pivotable about supports 61 formed on the base 63 of the cartridge 10.

By carrying out the operations in the reverse order, the filter can be assembled again without requiring the replacement of any component.

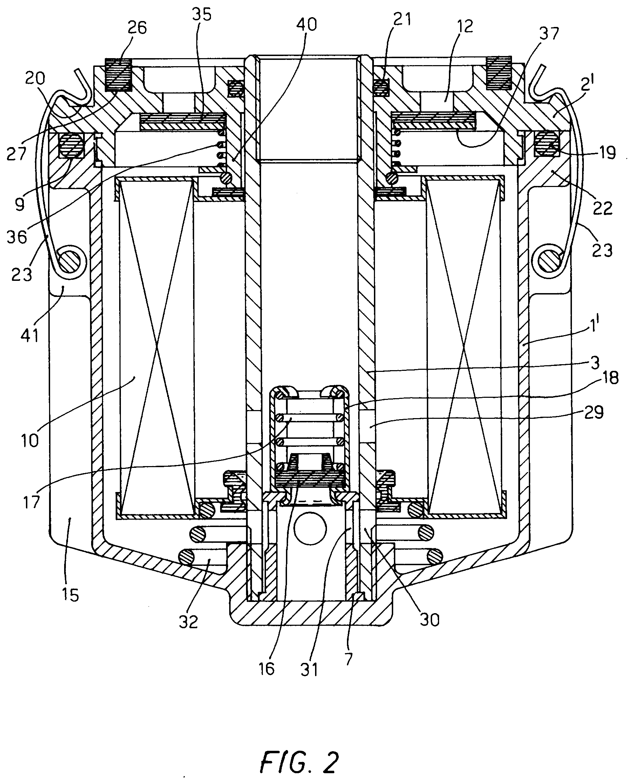

Fig.2 illustrates another embodiment of the filter according to the invention where the body 1' is externally provided with a circumferential rim 22 in which a recess 9 is formed that is adapted to receive a seal 19 against which rests the cover 2' closing the body 1'.

A seal 21 is further provided between the cover 2' and the sleeve 3.

A peripheral circumferential groove 20 is formed in the surface of the cover 2' facing the engine for receiving the free ends of two snap hooks 23 for rataining the cover 2' against the body 1', with the loop-shaped opposite ends of the hooks being rotatably secured to radial projections 41 externally formed on body 1'.

A circumferential groove 27 is further formed on the cover 2' for retaining a sealing member 26 mounted between the cover 2' and the engine onto which the filter is mounted.

In this second embodiment of the filter of the invention, the opening of the assembly for removing the filter and cleaning the cartridge is accomplished by simply disengaging the snap hooks 23 and therefore without the use of any tool.

The disclosed embodiment further prevents that the filter can be opened by disengaging the hooks 23 after that the filter has been assembled.

With reference to Fig.s 3 and 5 it is illustrated a third embodiment of the filter wherein the body 1 contains two washable filter cartridges 10 and 10'' fastened to each other. The first cartrigge 10 is positioned near the closed end of the body 1 and achieves a rough filtration, whereas the second one, positioned near the open end of the body 1 and separated by the first through a partition 45 and a sealing ring 46 pressed against the sleeve 3, achieves a finer filtration.

This way there has been obtained a double filtration long-life filter.

Still referring to Fig.3, the filter assembly comprises an outlet conduit 42 for the fine filtering circuit, formed by a separating ring member 49 disposed between the sleeve 3 and an inwardly extension of the cover 2''. The outlet couìnduit 42, through a conduit 47 provided in the cover 2'', conveys the lubricant from the cartridge 10'' into an auxiliary conduit for directly returning the lubricant into the engine oil sump.

A seal 44 in the cover 2'' prevents the lubricant filtrated by the cartridge 10'' from coming into contact with the lubricant flowing from the engine and directed to the filter, through the holes 12.

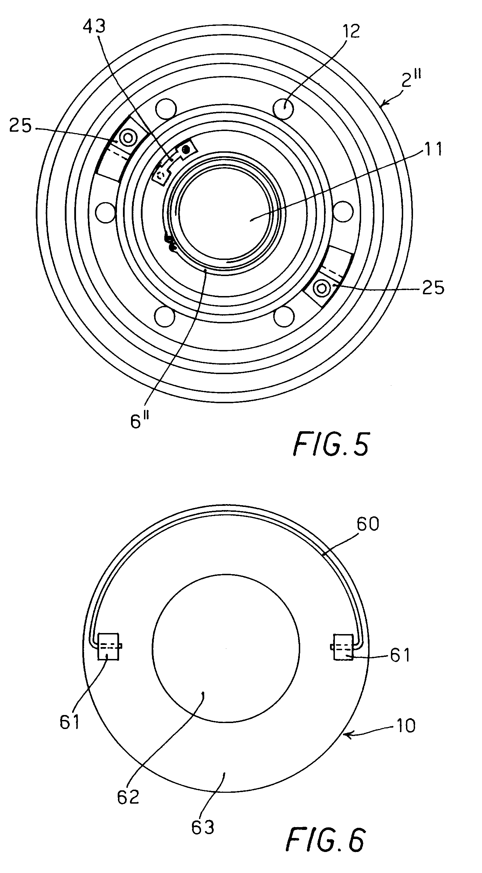

In order to prevent the filter depletion when the engine stops, in case the filter is mounted upside down on the engine, an elastic tab 43, shown in Fig.5, is provided for closing the conduit 47.

The sleeve 3 further provides towards the open end with respect to the shoulder 4, a circumferential groove for partially housing a removable elastic sealing ring 6'', of the type known as "Seeger ring".

Preferably in the rough filter cartridge 10 there are used stainless steel sheets having a porosity comprised between 25 and 40 µm, made from a fabric known as Reps or Touraille, whereas in the fine filter cartridge 10'' there are used stainless steel sheets with a porosity comprised between 10 and 14 µm and manufactured from the same type of fabric.

Moreover the fine filter cartridge 10'' is formed by pleating or accordion folding a sheet formed by superimposing the stainless steel filtering fabric on a network support with larger stainless steel meshes, for the purpose of stiffening the construction of the cartridge.

In the above disclosed embodiments, but with particular reference to the embodiments in which the sealing between the engine and the filter is realized through a seal positioned on the cover, such as for example in the embodiment of Fig.2, the cover can be provided with axiali teeth 8, adapted to engage corresponding seats 50 provided in the body 1 for preventing the rotation between the body 1 and the cover 2 when a torque is aplied to the former, during the assembling and disassembling operations of the filter, see Fig.s 4a and 4b.

As an alternative the teeth 8 and the seats 50 can have a radial extension instead of an axial extension.

In the above disclosed embodiments, both the body 1 and the cover 2 and the sleeve 3 are preferably obtained by die casting, but they could also be formed from different materials, e.g. from plastics, whereas all the seals are made of Viton.

Further the fastening of the sleeve 3 to the body 1 (or 1') of the filter can be realized by screwing, as shown in Fig. 2.

With the aim of facilitating the opening of the filter and preventing damages to parts thereof, according to the invention there is provided an extractor or puller device 70 illustrated in Fig.s 7 and 8.

Such device comprises a tubular member 74 having a threaded terminal end to be screwed on the sleeve 3 and the other terminal end equipped with a knob 71 retained by a pin 77.

The device 70 further comprises a projection 72 that radially extends with respect to the member 74 and is provide with "L" shaped terminations 73.

The projection 72 is secured to the member 74 by means of rivets 75, and with a tubular insert 76 interposed between them and allowing for a rotation in respect of the member 74, whereby the "L" shaped terminations extend along opposed directions and are parallel to each other, subtantially perpendicular to the longitudinale axis of the member 74.

The puller 70 is screwed on the sleeve 3 of the filter until the "L" shaped terminations of the projections 72 penetrate into the hooks 25 provided on the cover 2.

Then the puller is rotated so that the "L" shaped terminations 73 engages the inner surface of the hooks 25.

By unscrewing the device 70, the cover 2 is dragged by the projection 72 until it comes out from the body 1.

On the contrary, when acting in the opposite direction, the cover 2 is inserted into the body 1 when the filter is reassembled.

In all the above illustrated operations, the cartridge(s) 10,10'' can be removed very easily without the risk of damaging the filter components.

The filter assembly according to the invention allows to reuse the filter cartridge at least ten times, whereas the life of the filter body is practically the same as that of the engine of the vehicle and therefore no replacement will be necessary in the whole life of the engine.

Thanks to its improved characteristics of resistance with respect to the paper used for the conventional cartridges, the washable material from which the filter cartridge 10 is made has shown an improved resistance against clogging under the same conditions of initial filtering capability.

The above mentioned advantages become more evident for high performance uses where the filtering member is subjected to high stresses due to the high pressure of the oil and to the speed of the flow in the lubricating circuit.

## Claims

1. A long-life oil filter for internal combustion engines characterized in that it comprises:
- un cup-shaped body (1), internally provided with a circumferential shoulder (4) at its open end;
- un cover (2) for closing the open end of the body (1) against said circumferential (4) shoulder and provided with openings (12,11) for the oil inlet and outlet;
- un sleeve (3) centrally positioned within said body (1) and having one end firmly fastened to the closed end of the body (1) and the other end passing through the cover (2) and free to be coupled to a second sleeve (28) provided in the engine for securing the filter thereto;
- at least a filter cartridge (10) of a washable material, housed within the body (1) and removable therefrom;
- means for blocking the cover (2) against the body (1), removable and adapted to prevent the cover (2) from coming out from the body (1);
- a pair of sealing members (13, 14) positioned between the cover (2) and the body (1) and between the cover (2) and the first sleeve (3), respectively.

2. A filter as claimed in claim 1, characterized in that said blocking means comprises a circumferential groove (5) internally formed within said sleeve (3) towards the open end with respect to the shoulder (4), and a removable open elastic ring (6) received by said groove (5) and partially protruding therefrom so as to restrain the axial movement of the cover (2) when this latter is in the closure position within the body (1) and against the shoulder (4).

3. A filter as claimed in claim 1, characterized in that said blocking means comprises a circumferential groove externally formed on said sleeve (3) towards the open end with respect to the shoulder (4), and a removable open elastic ring (6'') received by said groove (5) and partially protruding therefrom so as to restrain the axial movement of the cover (2; 2'') when this latter is in the closure position within the body (1) and against the shoulder (4).

4. A filter as claimed in claim 2 o 3, characterized in that said cover (2) has a series of radial teeth (8) for engaging as many seats (50), formed in the shoulder (4), and adapted to prevent the rotation of the body (1) with respect to the cover (2) when a torque is applied to the former during the assembling and disassembling of the filter.

5. A filter as claimed in claim 2 o 3, characterized in that the cover (2) has a serie of axial teeth (8) for engaging as many seats (50), formed in the shoulder (4), and adapted to prevent the rotation of the body (1) with respect to the cover (2) when a torque is applied to the former during the assembling and disassembling of the filter.

6. A long-life oil filter for internal combustion engines comprising:
- un cup-shaped body (1'), internally provided with a circumferential rim (22) at its open end;
- un cover (2') for closing the open end of the body (1') and provided with openings (12,11) for the oil inlet and outlet, with a peripheral circumferential groove (20) and a circumferential groove (27);
- un sleeve (3) centrally positioned within said body (1') and having one end firmly fastened to the closed end of the body (1') and the other end passing through the cover (2') and free to be coupled to a second sleeve (28) provided in the engine for securing the filter thereto;
- at least a filter cartridge (10) of a washable material, housed within the body (1') and removable therefrom;
- means for blocking the cover (2') against the body (1'), said means being removable and adapted to prevent the cover (2') from coming out from the body (1');
- a pair of sealing members (19, 21) positioned between the cover (2') and the body (1') and between the cover (2') and the first sleeve (3), respectively.

7. A filter as claimed in claim 6, characterized in that said blocking means comprises at least two hooks (23) having one end pivotally secured to radial projections (41) provided externally of the body (1') and the other end engaging said groove (20).

8. A filter as claimed in claim 6, characterized in that said cover (2') has a series of radial teeth (8) for engaging as many seats (50) formed on the rim (22) and capable of preventing the rotation of the body (1') with respect to the cover (2') when a torque is applied to the former during the assembling and disassembling of the filter.

9. A filter as claimed in claim 6, characterized in that the cover (2') has a series of axial teeth (8) for engaging as many seats (50), formed in the rim (22) and adapted to prevent the reciprocal rotation of the body (1) with respect to the cover (2) when a torque is applied to the former during the assembling and disassembling of the filter.

10. A filter as claimed in claim 1 or 6, characterized in that there is provided a by-pass device for allowing the oil flow when the cartridge (10) è clogged, said device being positioned within the sleeve (3) and comprising a cap (16), a spring (17) and a cage (18) for retaining said spring (17).

11. A filter as claimed in any of the preceding claims, characterized in that axial cooling fins (15) are formed outside said body (1).

12. A filter as claimed in any of the preceding claims, characterized in that the body (1) and the cover (2) are made through die-cast.

13. A filter as claimed in any of the preceding claims, characterized in that the body (1) and the cover (2) are made from stamped metal plate.

14. A filter as claimed in any of the preceding claims, characterized in that it comprises two cartridges (10, 10'') the first of which is located near the closed end of the body (1,1') and the second of which is located near the open end of the body (1,1'), said cartridges having different filtering capability.

15. A filter as claimed in claim 14, characterized in that a conduit (47) is provided in the cover (2'') for the flow of the oil from the cartridge (10'') having a larger filtering capability and directed to the oil sump of the engine.

16. A filter as claimed in any of the preceding claims characterized in that the or each cartridge (10;10'') comprises a pleated member formed of a porous stainless steel fabric.

17. A filter as claimed in claim 16, characterized in that said porous stainless steel fabric comprises a fabric with a porosity from 10 to 100 µm made of stainless steel wires in accordance with the Reps typology.

18. A filter as claimed in claim 16, characterized in that said porous stainless steel fabric comprises a fabric with a porosity from 10 to 100 µm made of stainless steel wires in accordance with the Touraille typology.

19. A filter as claimed in claim 17 o 18, characterized in that the cartridge (10) having a lower filtering capability is made of a stainless steel wire fabric having meshes comprised between 25 and 40 µm, whereas the cartridge (10'') having a larger filtering capability is made of a stainless steel wire fabric having meshes comprised between 10 and 14 µm.

20. A filter as claimed in claim 19, characterized in that said cartridge (10'') having a larger filtering capability is made by pleating a filtering fabric of stainless steel superimposed on a net support with larger stainless steel meshes with the purpose of stiffening the construction of the cartridge.

21. A filter as claimed in any of the preceding claims, characterized in that the cartridge (10) comprises a pleated member of a synthetic material resistant to solvents.

22. A filter as claimed in any of the preceding claims, characterized in that the sleeve (3) is screwed over said filter body (1;1').

23. A filter as claimed in any of the preceding claims characterized in that the cartridge (10;10'') is provided with a handle (60) for its extraction.

24. An puller device for a filter as claimed in the preceding claims, comprising a threaded tubular member (74) to which there is fastened a projection (72) having "L" shaped terminations (73) adapted to engage the hooks (25) of the cover (2) of the filter when said member (74) is screwed over the sleeve (3) of the filter and adapted to allow the compression or the extraction of the cover (2) when said member (74) is screwed or unscrewed over the sleeve (3), respectively.
